# EUROPEAN PATENT APPLICATION

(11) **EP 4 239 104 A2**
(43) Date of publication of application: **06.09.2023**
(21) Application number: 23153414.0
(22) Date of filing: 26.01.2023
(51) Int. Cl.: C25B 1/042, B01B 1/00, B01D 1/00, B05B 1/00, B01D 1/14, B01D 24/00, C02F 103/08

(54) **HYDROGEN PRODUCTION SYSTEM AND HYDROGEN PRODUCTION METHOD**

(30) Priority: 14.02.2022 JP 2022020625
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa (JP)
(72) Inventor: INUZUKA, Riko, Kawasaki-shi, Kanagawa (JP); TSUKADA, Yuka, Kawasaki-shi, Kanagawa (JP); SUZUKI, Yusuke, Kawasaki-shi, Kanagawa (JP); MATSUMOTO, Jyunpei, Kawasaki-shi, Kanagawa (JP); OSADA, Norikazu, Kawasaki-shi, Kanagawa (JP); FUJITA, Koshito, Kawasaki-shi, Kanagawa (JP); MIYAMOTO, Shinya, Kawasaki-shi, Kanagawa (JP); YAMASHITA, Yu, Kawasaki-shi, Kanagawa (JP); TSUCHIYA, Naomi, Kawasaki-shi, Kanagawa (JP); TAJIMA, Ayaka, Kawasaki-shi, Kanagawa (JP)
(74) Representative: Hoffmann Eitle

(57) **Abstract**

A hydrogen production system according to an embodiment includes an evaporator that evaporates seawater to generate water vapor, an electrolytic device that electrolyzes the water vapor supplied from the evaporator to produce hydrogen, and a removal mechanism that is provided between the evaporator and the electrolytic device and removes a seawater component from the water vapor.

## Description

### FIELD

Embodiments of the present invention relate to a hydrogen production system and a hydrogen production method.

### BACKGROUND

Examples of the new energy include hydrogen. Examples of a method of producing hydrogen include a method in which water is electrolyzed using an electrolytic device. The hydrogen production method by electrolysis of water is classified into a solid polymer type, a phosphoric acid type, a molten carbonate type, a solid oxide type, and the like according to a temperature range, a type of a material or a fuel to be used, and the like. The solid polymer type and the phosphoric acid type are low-temperature hydrogen production methods operated at a low temperature. In the low-temperature hydrogen production method, liquid water is electrolyzed to produce hydrogen. The molten carbonate type and the solid oxide type are high-temperature hydrogen production methods operated at a high temperature. In the high-temperature hydrogen production method, water vapor is electrolyzed to produce hydrogen. The low-temperature hydrogen production method has been developed more than the high-temperature hydrogen production method, and most of hydrogen production systems by electrolysis of water used as current products use this low-temperature hydrogen production method.

Conventionally, in a hydrogen production method by electrolysis of water, fresh water has been used as raw water. Therefore, the location where the hydrogen production system can be installed is limited to a location where fresh water can be obtained. Furthermore, it is expected that fresh water will become increasingly rare in the future and the price will rise, and it is considered that the cost of raw water will continue to rise in the future.

Therefore, it is conceivable to use seawater as the raw water. As a result, it is possible to install a hydrogen production system even in an area where it is difficult to obtain fresh water, such as a remote island, on a ship, or in a desert, and the applicable area can be greatly expanded. Furthermore, since seawater is abundant unlike fresh water, it is considered that raw water can be continuously obtained at low cost in the future. As described above, there is a great advantage in using seawater as raw water for hydrogen production.

However, there are many problems when seawater is used as raw water for hydrogen production. First, as described above, the low-temperature hydrogen production method is more developed and technically established than the high-temperature hydrogen production method, and thus it is conceivable to apply the low-temperature hydrogen production system to the electrolysis of seawater as a first option. However, in a case where seawater is electrolyzed in the low-temperature hydrogen production system, a large amount of chlorine is generated. Since chlorine is toxic and corrosive, its treatment is costly. Furthermore, efficiency reduction due to precipitation of seawater components on a catalytic unit of electrolysis may also occur. Moreover, since corrosion may occur in all portions in contact with seawater, it is required to use an expensive component with corrosion measures or to replace the component in a short period of time. These problems can be solved by purifying seawater in advance to desalinate the seawater, but the purification requires a large cost.

On the other hand, in a case where a high-temperature hydrogen production system is applied, seawater is evaporated to generate water vapor, and the water vapor is electrolyzed to produce hydrogen, so that seawater components (Hereinafter, referred to as seawater impurities.) such as sodium chloride contained in seawater can be removed when the seawater is vaporized. Nevertheless, trace amounts of seawater impurities may be included in the water vapor. The concentration of seawater impurities in water vapor when seawater is vaporized is about several hundred ppm at the maximum, which exceeds the allowable concentration when water vapor is electrolyzed in the high-temperature hydrogen production system. Therefore, it is desirable to reduce the concentration of seawater impurities in water vapor.

### BRIEF DESCRIPTION OF THE DRAWINGS

Fig. 1 is a schematic diagram of a hydrogen production system according to a first embodiment.
Fig. 2 is a schematic diagram of a hydrogen production system according to a second embodiment.
Fig. 3 is a cross-sectional view illustrating a schematic configuration of a removal mechanism included in Fig. 2.
Fig. 4 is a schematic diagram of a hydrogen production system according to a third embodiment.

### DETAILED DESCRIPTION

A hydrogen production system according to an embodiment includes an evaporator that evaporates seawater to generate water vapor, an electrolytic device that electrolyzes the water vapor supplied from the evaporator to produce hydrogen, and a removal mechanism that is provided between the evaporator and the electrolytic device and removes a seawater component from the water vapor.

Furthermore, a hydrogen production method according to the embodiment is a hydrogen production method of producing hydrogen from seawater, the method including an evaporation step of evaporating seawater to generate water vapor, a removal step of removing a seawater component from the water vapor after the evaporation step, and an electrolysis step of electrolyzing the water vapor to produce hydrogen after the removal step.

Hereinafter, a hydrogen production system and a hydrogen production method according to embodiments of the present invention will be described with reference to the drawings.

### (First embodiment)

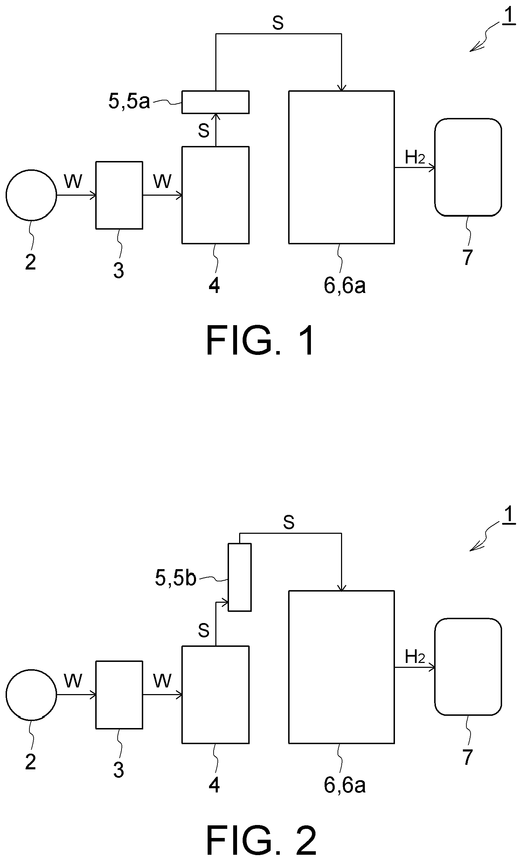

First, a hydrogen production system and a hydrogen production method according to a first embodiment will be described with reference to Fig. 1.

A hydrogen production system 1 according to the present embodiment produces hydrogen H₂ from seawater W using the seawater W as raw water. The seawater W is collected from a water source 2 such as the ocean, for example. As illustrated in Fig. 1, the hydrogen production system 1 may include a filtration mechanism 3, an evaporator 4, a removal mechanism 5 and an electrolytic device 6. The seawater W collected from the water source 2 is supplied to the filtration mechanism 3 through a supply pipe.

The filtration mechanism 3 is configured to filter the seawater W collected from the water source 2. The filtration mechanism 3 removes solid impurities such as seaweeds contained in the seawater W. The filtration mechanism 3 may include a filter. The filtration mechanism 3 may remove solid impurities from the seawater W by collecting the solid impurities with the filter. The filtration mechanism 3 is provided upstream of the evaporator 4 described later, and the seawater W filtered by the filtration mechanism 3 is supplied to the evaporator 4.

The evaporator 4 is provided downstream of the filtration mechanism 3. The evaporator 4 is connected to the filtration mechanism 3 via a pipe. The evaporator 4 is configured to evaporate the seawater W supplied from the filtration mechanism 3 to generate water vapor S. The evaporator 4 may include a heating device. The evaporator 4 may evaporate the seawater W by heating the seawater W with the heating device. The heating device may heat the seawater W at a temperature in a range of 70°C or more and 100°C or less. This evaporator 4 vaporizes the seawater W to remove most (for example, 99% or more) of seawater components (Hereinafter, referred to as seawater impurities.) such as sodium chloride contained in the seawater W. The evaporator 4 is provided on an upstream side of the removal mechanism 5 to be described later, and the water vapor S generated by the evaporator 4 is supplied to the removal mechanism 5.

The removal mechanism 5 is provided downstream of the evaporator 4. The removal mechanism 5 is provided between the evaporator 4 and the electrolytic device 6 described later. The removal mechanism 5 is connected to the evaporator 4 via a pipe. The removal mechanism 5 is configured to remove seawater impurities from the water vapor S supplied from the evaporator 4. As described above, most (for example, 99% or more) of the seawater impurities are removed by the vaporization of the seawater W by the evaporator 4. Nevertheless, trace amounts of the seawater impurities may be contained in the water vapor S. The concentration of the seawater impurities in the water vapor S generated by the evaporator 4 is about several hundred ppm at the maximum. On the other hand, the allowable concentration of the seawater impurities in the water vapor S when the water vapor S is electrolyzed by the electrolytic device 6 described later is several ppm to several tens ppm. Therefore, the concentration of the seawater impurities in the water vapor S generated by the evaporator 4 exceeds the allowable concentration when the water vapor S is electrolyzed by the electrolytic device 6. Therefore, in the present embodiment, the removal mechanism 5 that removes the seawater impurities from the water vapor S is provided between the evaporator 4 and the electrolytic device 6.

As a result of intensive studies by the present inventors, it has become clear that the seawater impurities contained in the water vapor S are not vaporized together with water at the time of the vaporization of the seawater W, but are conveyed by winding up fine droplets of the seawater W at the time of the vaporization of the seawater W. Therefore, in the present embodiment, the removal mechanism 5 is configured to remove the seawater impurities from the water vapor S by removing the droplets of the seawater W associated with the water vapor S.

In the present embodiment, the removal mechanism 5 includes a filter 5a. The filter 5a is configured to collect droplets of the seawater W associated with the water vapor S. The removal mechanism 5 collects the droplets of the seawater W associated with the water vapor S by the filter 5a to remove the droplets of the seawater W and remove the seawater impurities from the water vapor S.

The filter 5a preferably has high heat resistance and low hygroscopicity. In particular, since an operating environmental temperature of the filter 5a is assumed to be 70°C to 200°C, the filter 5a preferably has heat resistance capable of withstanding this operating environmental temperature. Examples of such a filter include, but are not limited to, a glass filter made of borosilicate. From the viewpoint of heat resistance, the glass filter preferably does not contain an organic binder. A roughness (holding particle size) of the filter 5a is preferably 0.1 µm or more and 10 µm or less from the viewpoint of collection efficiency and pressure loss. When the roughness of the filter 5a is 0.1 µm or more, clogging and an increase in pressure loss can be suppressed. When the roughness of the filter 5a is 10 µm or less, removal performance of the seawater impurities can be secured. Furthermore, a plurality of the filters 5a may be provided.

The filter 5a may be located above the evaporator 4. The pipe connecting the evaporator 4 and the filter 5a may extend in a vertical direction. As a result, before the water vapor S supplied from the evaporator 4 reaches the filter 5a, the droplets of the seawater W accompanying the water vapor S can be dropped by gravity to some extent to be removed. Furthermore, the droplets of the seawater W collected by the filter 5a can be dropped by gravity, and clogging of the filter 5a can be suppressed.

The removal mechanism 5 is provided on the upstream side of the electrolytic device 6, and the water vapor S from which the seawater impurities have been removed by the removal mechanism 5 is supplied to the electrolytic device 6. Note that, although not illustrated, the water vapor S having passed through the removal mechanism 5 may be heated by heat exchange with an exhaust gas of the hydrogen production system 1 such as hydrogen or oxygen before being supplied to the electrolytic device 6. Furthermore, the water vapor S may be mixed with another gas such as hydrogen and supplied to the electrolytic device 6.

The electrolytic device 6 is provided downstream of the evaporator 4 and the removal mechanism 5. The electrolytic device 6 is connected to the removal mechanism 5 via a pipe. The electrolytic device 6 is configured to produce hydrogen H₂ by electrolyzing the water vapor S supplied from the evaporator 4 through the removal mechanism 5. The electrolytic device 6 may include an electrolytic cell 6a of a solid oxide type. That is, the electrolytic device 6 may produce hydrogen H₂ by electrolyzing the water vapor S using the electrolytic cell 6a of the solid oxide type. In this case, the electrolytic device 6 is operated at a temperature in a range of 600°C or more and 1000°C or less. Alternatively, the electrolytic device 6 may include an electrolytic cell 6a of a molten carbonate type. That is, the electrolytic device 6 may produce hydrogen H₂ by electrolyzing the water vapor S using the electrolysis cell 6a of the molten carbonate type. In this case, the electrolytic device 6 is operated at a temperature in a range of 600°C or more and 700°C or less. The electrolytic device 6 may produce other gases such as oxygen together with hydrogen H₂. Furthermore, the electrolytic device 6 may produce a mixed gas (syngas) of hydrogen H₂ and carbon monoxide by supplying carbon dioxide together with the water vapor S and performing a co-electrolysis reaction. The electrolytic device 6 is provided upstream of a storage tank 7 described later, and hydrogen H₂ produced by the electrolytic device 6 is supplied to the storage tank 7.

The storage tank 7 is provided downstream of the electrolytic device 6. The storage tank 7 is connected to the electrolytic device 6 via a pipe. The storage tank 7 is configured to store hydrogen H₂ supplied from the electrolytic device 6. The hydrogen H₂ stored in the storage tank 7 is consumed according to the application.

Next, effects of the present embodiment having such a configuration will be described. Here, first, a hydrogen production method according to the present embodiment will be described.

The hydrogen production method according to the present embodiment may include a filtration step, an evaporation step, a removal step and an electrolysis step.

First, a filtration step is performed. In the filtration step, the seawater W collected from the water source 2 is filtered by the filtration mechanism 3. As a result, solid impurities such as seaweeds can be removed from the seawater W. For example, the solid impurities may be removed from the seawater W by collecting the solid impurities by the filter of the filtration mechanism 3.

After the filtration step, an evaporation step is performed. In the evaporation step, the seawater W filtered in the filtration step is evaporated by the evaporator 4 to generate the water vapor S. For example, the seawater W may be vaporized by heating the seawater W at a temperature in the range of 70°C or more and 100°C or less by the heating device of the evaporator 4. At this time, most (for example, 99% or more) of the seawater impurities contained in the seawater W are removed.

After the evaporation step, a removal step is performed. In the removal step, the removal mechanism 5 removes the seawater impurities from the water vapor S generated in the evaporation step. As described above, most (for example, 99% or more) of the seawater impurities are removed in the evaporation step. Nevertheless, trace amounts of the seawater impurities may be contained in the water vapor S. The concentration of the seawater impurities in the water vapor S generated in the evaporation step is about several hundred ppm at the maximum. On the other hand, the allowable concentration of the seawater impurities in the water vapor S when the water vapor S is electrolyzed in the electrolytic step described later is several ppm to several tens ppm. Therefore, the concentration of the seawater impurities in the water vapor S generated in the evaporation step exceeds the allowable concentration when the water vapor S is electrolyzed in the electrolysis step. Therefore, in the present embodiment, a removal step of removing the seawater impurities from the water vapor S is provided between the evaporation step and the electrolysis step.

As described above, as a result of intensive studies by the present inventors, it has become clear that the seawater impurities contained in the water vapor S are not vaporized together with water at the time of the vaporization of the seawater W, but are conveyed by winding up fine droplets of the seawater W at the time of the vaporization of the seawater W. Therefore, in the present embodiment, in the removal step, the seawater impurities are removed from the water vapor S by removing the droplets of the seawater W associated with the water vapor S. In the present embodiment, the droplets of the seawater W associated with the water vapor S are collected by the filter 5a of the removal mechanism 5 to remove the droplets of the seawater W and remove the seawater impurities from the water vapor S.

After the removal step, an electrolysis step is performed. In the electrolysis step, the water vapor S from which the seawater impurities have been removed in the removal step is electrolyzed by the electrolytic device 6 to produce hydrogen H₂. For example, hydrogen H₂ may be produced by electrolyzing the water vapor S using the solid oxide type electrolytic cell 6a included in the electrolytic device 6. Other gases such as oxygen may be produced together with hydrogen H₂ by the electrolytic device 6.

The Hydrogen H₂ produced in the electrolysis step is stored in the storage tank 7. The hydrogen H₂ stored in the storage tank 7 is then consumed according to the application.

As described above, according to the present embodiment, the removal mechanism 5 that removes the seawater impurities from the water vapor S is provided between the evaporator 4 and the electrolytic device 6. This makes it possible to reduce the concentration of the seawater impurities in the water vapor S supplied to the electrolytic device 6. Therefore, the concentration of the seawater impurities in the water vapor S can be made less than or equal to the allowable concentration when the water vapor S is electrolyzed by the electrolytic device 6. As a result, it is possible to solve problems such as a decrease in efficiency, corrosion of members and an increase in cost that may occur in a case where the seawater is used as raw water for the hydrogen production.

Furthermore, according to the present embodiment, the removal mechanism 5 removes the seawater impurities from the water vapor S by removing the droplets of the seawater W associated with the water vapor S. As a result of intensive studies by the present inventors, it has become clear that the seawater impurities contained in the water vapor S are not vaporized together with water at the time of the vaporization of the seawater W, but are conveyed by winding up fine droplets of the seawater W at the time of the vaporization of the seawater W. Therefore, by removing the droplets of the seawater W associated with the water vapor S by the removal mechanism 5, the seawater impurities can be effectively removed from the water vapor S.

Furthermore, according to the present embodiment, the removal mechanism 5 includes the filter 5a that collects the droplets of the seawater W associated with the water vapor S. By using such a filter 5a, the droplets of the seawater W associated with water vapor S can be removed. Therefore, the seawater impurities can be effectively removed from the water vapor S.

Furthermore, according to the present embodiment, the filtration mechanism 3 that filters the seawater W supplied to the evaporator 4 is provided upstream of the evaporator 4. This makes it possible to remove the solid impurities such as seaweeds from the seawater W supplied to the evaporator 4. Therefore, it is possible to prevent the solid impurities from being supplied to the evaporator 4 together with the seawater W, and it is possible to prevent a failure or a decrease in efficiency of the evaporator 4.

Furthermore, according to the present embodiment, the electrolytic device 6 includes the electrolytic cell 6a of the solid oxide type or the molten carbonate type. The present embodiment is particularly useful in such a high-temperature hydrogen production system 1. That is, in a case where the seawater W is used as raw water in the high-temperature hydrogen production system 1, the evaporator 4 evaporates the seawater W to generate water vapor S, and the electrolytic device 6 electrolyzes the water vapor S to produce hydrogen H₂. According to the present embodiment, since the removal mechanism 5 is provided between the evaporator 4 and the electrolytic device 6, the concentration of the seawater impurities in the water vapor S supplied to the electrolytic device 6 can be reduced.

### (Second embodiment)

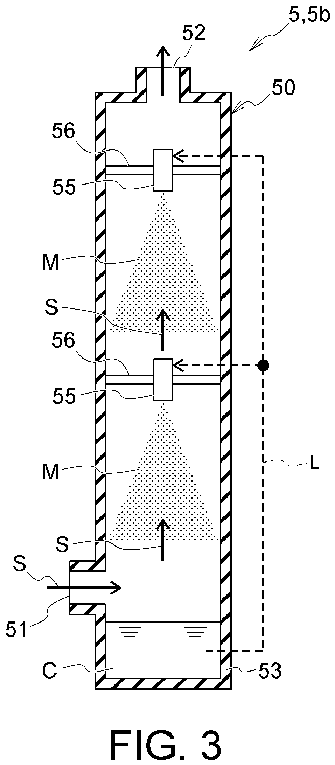

Next, a hydrogen production system and a hydrogen production method according to a second embodiment will be described with reference to Figs. 2 and 3.

The second embodiment illustrated in Figs. 2 and 3 is mainly different from the first embodiment in that the removal mechanism includes a spray device that injects atomized liquid to the droplets of the seawater accompanying the water vapor, and other configurations are substantially the same as those of the first embodiment illustrated in Fig. 1. Note that in Figs. 2 and 3, the same parts as those of the first embodiment illustrated in Fig. 1 are denoted by the same reference signs, and detailed description thereof is omitted.

As illustrated in Fig. 2, in the present embodiment, the removal mechanism 5 includes a spray device 5b. The spray device 5b is configured to inject atomized liquid M to the droplets of the seawater W accompanying the water vapor S. The removal mechanism 5 removes the droplets of the seawater W and removes the seawater impurities from the water vapor S by injecting the atomized liquid M to the droplets of the seawater W accompanying the water vapor S by the spray device 5b.

As illustrated in Fig. 3, the spray device 5b may include a housing 50 and a spray nozzle 55 provided in the housing 50. The housing 50 may be a hollow cylindrical structure extending in the vertical direction. The housing 50 may include an inlet portion 51, an outlet portion 52 and a liquid reservoir 53.

As illustrated in Fig. 3, the inlet portion 51 may be provided on a lower side surface of the housing 50 in the vertical direction. The inlet portion 51 is connected to the evaporator 4 via a pipe, and the water vapor S generated in the evaporator 4 flows into the housing 50 from this inlet portion 51. As illustrated in Fig. 3, the outlet portion 52 may be provided on an upper side of the housing 50 in the vertical direction. The outlet portion 52 is connected to the electrolytic device 6 via a pipe, and the water vapor S passing through the housing 50 flows out from the outlet portion 52 to the electrolytic device 6. With such arrangement of the inlet portion 51 and the outlet portion 52, the water vapor S flowing in from the inlet portion 51 flows from a lower side to an upper side in the vertical direction in the housing 50 and flows out from the outlet portion 52 as indicated by a solid arrow in Fig. 3.

As illustrated in Fig. 3, the liquid reservoir 53 may be provided in a lower part of the housing 50 in the vertical direction. The liquid reservoir 53 may be provided below the inlet portion 51 in the vertical direction. The liquid reservoir 53 may be provided below the spray nozzle 55 described later in the vertical direction. The liquid reservoir 53 is configured to store liquid C. The liquid C may be, for example, water. As the water, pure water or seawater may be used. The liquid C stored in the liquid reservoir 53 passes through a supply pipe L and is supplied to the spray nozzle 55 described later. As will be described later, the spray nozzle 55 injects the atomized liquid M downward in the vertical direction. Therefore, the atomized liquid M injected from the spray nozzle 55 is stored in this liquid reservoir 53 as the liquid C. In this manner, the liquid C circulates between the liquid reservoir 53 and the spray nozzle 55. Furthermore, as described later, the liquid C may contain the droplets of the seawater W that has collided with the atomized liquid M injected from the spray nozzle 55 and dropped.

As illustrated in Fig. 3, the spray nozzle 55 may be provided above the inlet portion 51 in the vertical direction. The spray nozzle 55 may be provided above the liquid reservoir 53 in the vertical direction. As illustrated in Fig. 3, a plurality of the spray nozzles 55 may be provided. The spray nozzle 55 may be supported by the housing 50 via a support portion 56. The spray nozzle 55 sprays the liquid C supplied from the liquid reservoir 53 in the form of the atomized liquid M. As illustrated in Fig. 3, the spray nozzle 55 may inject the atomized liquid M downward in the vertical direction. As described above, the water vapor S flows from the lower side to the upper side in the vertical direction in the housing 50. Therefore, the spray nozzle 55 injects the atomized liquid M to the water vapor S in a direction opposite to a flow direction of the water vapor S. The atomized liquid M injected from the spray nozzle 55 collides with the droplets of the seawater W accompanying the water vapor S. As a result, the droplets of the seawater W accompanying the water vapor S fall downward together with the atomized liquid M and are collected in the liquid reservoir 53.

An injection angle of the spray nozzle 55 may be an angle in a range of 30 degrees or more and 120 degrees or less. The injection angle of the spray nozzle 55 may be appropriately selected according to a diameter of the housing 50 and the like. An injection speed of the spray nozzle 55 may be 1 m/sec or less. An injection flow rate of the spray nozzle 55 may be 300 L/min/m² or more, and more preferably 400 L/min/m² or more.

An average particle diameter of the atomized liquid M injected from the spray nozzle 55 may be 100 µm or more and 500 µm or less. An average particle diameter of the droplets of the seawater W accompanying the water vapor S is about several µm to several tens µm. Therefore, by setting the average particle diameter of the atomized liquid M to 100 µm or more, the droplets of the seawater W accompanying with the water vapor S can be effectively dropped. Note that the average particle diameter is calculated as a median diameter (D50) from a volume-based particle diameter distribution measured by a laser diffraction/scattering method.

A temperature of the atomized liquid M injected from the spray nozzle 55 may be a temperature in a range of the heating temperature (70°C to 100°C) by the heating device of the evaporator 4 or more to 100°C or less . When the temperature of the atomized liquid M is more than or equal to the heating temperature by the heating device of the evaporator 4, it is possible to prevent the water vapor S from condensing and returning to water. Furthermore, when the temperature of the atomized liquid M is 100°C or less, the volatilization of the liquid M can be suppressed.

The spray device 5b may be located above the evaporator 4. A pipe connecting the evaporator 4 and the spray device 5b may extend in the vertical direction. As a result, before the water vapor S supplied from the evaporator 4 reaches the spray device 5b, the droplets of the seawater W accompanying the water vapor S can be dropped by gravity to some extent to be removed.

Note that, in the above-described example, the spray nozzle 55 injects the atomized liquid M to the water vapor S in the direction opposite to the flow direction of the water vapor S, but it is not limited to this. For example, the spray nozzle 55 may inject the atomized liquid M to the water vapor S in the same direction as the flow direction of the water vapor S, or may inject the atomized liquid M to the water vapor S in a direction intersecting (for example, a direction orthogonal to) the flow direction of the water vapor S.

In the present embodiment, in the removal step of the hydrogen production method, the atomized liquid M is injected onto the droplets of the seawater W accompanying the water vapor S by the spray device 5b of the removal mechanism 5. The atomized liquid M injected from the spray nozzle 55 of the spray device 5b collides with the droplets of the seawater W accompanying the water vapor S. As a result, the droplets of the seawater W accompanying the water vapor S fall downward together with the atomized liquid M and are collected in the liquid reservoir 53. In this manner, the droplets of the seawater W are removed, and the seawater impurities are removed from the water vapor S.

As described above, according to the present embodiment, the removal mechanism 5 includes the spray device 5b that injects the atomized liquid M to the droplets of the seawater W accompanying the water vapor S. As a result, it is possible to remove the droplets of the seawater W accompanying the water vapor S by the atomized liquid M injected from the spray device 5b. Therefore, the seawater impurities can be effectively removed from the water vapor S.

### (Third embodiment)

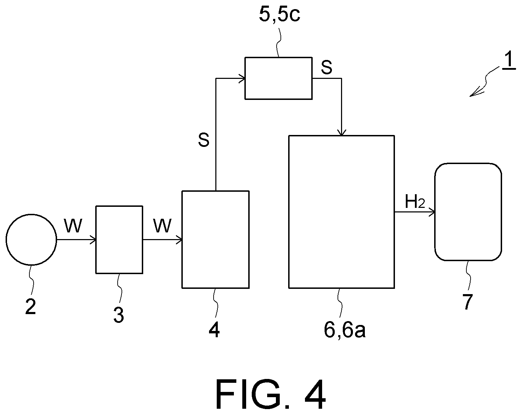

Next, a hydrogen production system and a hydrogen production method according to a third embodiment will be described with reference to Fig. 4.

The third embodiment illustrated in Fig. 4 is mainly different in that the removal mechanism includes a heating device that heats and evaporates the droplets of the seawater accompanying the water vapor, and other configurations are substantially the same as those of the first embodiment illustrated in Fig. 1. Note that, in Fig. 4, the same parts as those of the first embodiment illustrated in Fig. 1 are denoted by the same reference signs, and detailed description thereof is omitted.

As illustrated in Fig. 4, in the present embodiment, the removal mechanism 5 includes a heating device 5c. The heating device 5c is configured to heat and evaporate the droplets of the seawater W accompanying the water vapor S. By heating and evaporating the droplets of the seawater W accompanying the water vapor S by the heating device 5c, the seawater impurities contained in the droplets of the seawater W can be precipitated and removed as a solid in the heating device 5c. That is, the removal mechanism 5 removes the seawater impurities from the water vapor S by heating and evaporating the droplets of the seawater W accompanying the water vapor S by the heating device 5c.

The heating device 5c may heat the droplets of the seawater W at a temperature higher than the heating temperature (70°C to 100°C) by the heating device of the evaporator 4. For example, the heating device 5c may heat the droplets of the seawater W at a temperature in a range of 300°C or more and 1000°C or less.

The heating device 5c may be located above the evaporator 4. A pipe connecting the evaporator 4 and the heating device 5c may extend in the vertical direction. As a result, before the water vapor S supplied from the evaporator 4 reaches the heating device 5c, the droplets of the seawater W accompanying the water vapor S can be dropped by gravity to some extent to be removed.

In the present embodiment, in the removal step of the hydrogen production method, the droplets of the seawater W accompanying the water vapor S are heated and evaporated by the heating device 5c of the removal mechanism 5. As a result, the seawater impurities contained in the droplets of the seawater W are precipitated as a solid in the heating device 5c and removed. In this manner, the seawater impurities are removed from the water vapor S.

As described above, according to the present embodiment, the removal mechanism 5 includes the heating device 5c that heats and evaporates the droplets of the seawater W accompanying the water vapor S. As a result, the seawater impurities contained in the droplets of the seawater W can be precipitated and removed as a solid in the heating device 5c. Therefore, the seawater impurities can be effectively removed from the water vapor S.

Furthermore, according to the present embodiment, the heating device 5c heats the droplets of the seawater W at a temperature in the range of 300°C or more and 1000°C or less. As a result, the droplets of the seawater W accompanying the water vapor S can be reliably evaporated. Therefore, the seawater impurities can be effectively removed from the water vapor S.

### (Other embodiments)

The above-described embodiments may be appropriately combined.

That is, the removal mechanism 5 may include two or more of the filter 5a as described in the first embodiment, the spray device 5b as described in the second embodiment, and the heating device 5c as described in the third embodiment. For example, in the water vapor S supplied to the removal mechanism 5, the seawater impurities may be removed by the filter 5a or the spray device 5b, and then the seawater impurities may be further removed by the heating device 5c. This makes it possible to more effectively remove the seawater impurities from the water vapor S.

According to the embodiments described above, the concentration of the seawater impurities in the water vapor can be reduced.

Although some embodiments of the present invention have been described above, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. A hydrogen production system comprising:
an evaporator that evaporates seawater to generate water vapor;
an electrolytic device that electrolyzes the water vapor supplied from the evaporator to produce hydrogen; and
a removal mechanism provided between the evaporator and the electrolytic device to remove a seawater component from the water vapor.

2. The hydrogen production system according to claim 1, wherein the removal mechanism removes the seawater component from the water vapor by removing droplets of seawater accompanying the water vapor.

3. The hydrogen production system according to claim 2, wherein the removal mechanism includes a filter that collects the droplets.

4. The hydrogen production system according to claim 2 or 3, wherein the removal mechanism includes a spray device that injects atomized liquid to the droplets.

5. The hydrogen production system according to any one of claims 2 to 4, wherein the removal mechanism includes a heating device that heats and evaporates the droplets.

6. The hydrogen production system according to claim 5, wherein the heating device heats the droplets at a temperature in a range of 300°C or more and 1000°C or less.

7. The hydrogen production system according to any one of claims 1 to 6, further comprising a filtration mechanism that is provided upstream of the evaporator and filters seawater supplied to the evaporator.

8. The hydrogen production system according to any one of claims 1 to 7, wherein the electrolytic device includes an electrolytic cell of a solid oxide type or a molten carbonate type.

9. A hydrogen production method of producing hydrogen from seawater, the method comprising:
an evaporation step of evaporating seawater to generate water vapor;
a removal step of removing a seawater component from the water vapor after the evaporation step; and
an electrolysis step of electrolyzing the water vapor to produce hydrogen after the removal step.
